Europäisches Patentamt

European Patent Office

Office européen des brevets

(11) Veröffentlichungsnummer: **0 152 773**
**B1**

(19)

(12) ## EUROPÄISCHE PATENTSCHRIFT

(45) Veröffentlichungstag der Patentschrift:
**01.06.88**

(51) Int. Cl.⁴: **F 16 B 41/00**

(21) Anmeldenummer: **85100544.7**

(22) Anmeldetag: **19.01.85**

(54) **Befestigungsanordnung.**

(30) Priorität: **01.02.84 DE 3403369**

(43) Veröffentlichungstag der Anmeldung:
**28.08.85 Patentblatt 85/35**

(45) Bekanntmachung des Hinweises auf die Patenterteilung:
**01.06.88 Patentblatt 88/22**

(84) Benannte Vertragsstaaten:
**DE FR GB IT**

(56) Entgegenhaltungen:
**DE - A - 2 034 680**
**DE - A - 2 034 802**
**GB - A - 850 884**
**GB - A - 1 140 106**
**GB - A - 1 175 125**
**GB - A - 1 334 236**
**US - A - 2 545 514**
**US - A - 3 126 935**
**US - A - 3 169 032**

(73) Patentinhaber: **Mannesmann Kienzle GmbH,
Heinrich-Hertz-Strasse, D-7730 Villingen-Schwenningen
(DE)**

(72) Erfinder: **Endler, Max, Kopsbühl 62,
D-7730 Villingen-Schwenningen (DE)**
Erfinder: **Theilacker, Günter, Am Sunthauser Weg 3,
D-7737 Bad Dürrheim (DE)**

## Beschreibung

Die Erfindung betrifft ein Befestigungselement zum Befestigen und Plombieren eines von einem Bolzen durchdrungenen Bauteiles an einem den Bolzen halternden Bauteil, welches Befestigungselement auf den Bolzen axial aufsteckbar ist, bestehend aus zwei koaxial angeordneten und zylindrisch ausgebildeten Hülsen, die wenigstens axial federnd miteinander verbunden sind, mit an der inneren Hülse nach innen weisenden Rastelementen, die mit wenigstens einem an dem Bolzen ausgebildeten Einstich zusammenwirken, wobei der Innendurchmesser der inneren Hülse im wesentlichen gleich ist dem Durchmesser des Bolzens.

Wenn es beispielsweise bei Messgeräten wegen erforderlicher Wartungs- und Austauschfähigkeit auf eine problemlose Lösbarkeit der Verbindungen von einzelnen Funktionsgruppen tragenden Montageplatten, Gehäuseböden, Leiterplatten, Abdeckungen und anderer derartiger Bauteile mit geeigneten Ausbildungen an den Wänden der Gerätegehäuse sowie von gehäusebildenden Hauben oder Gehäusesegmenten mit diesen tragenden Rahmen ankommt, so ist es im allgemeinen üblich, Schraubverbindungen vorzusehen, obwohl Gewindeschneiden und Schraubmontage in der Serienfertigung relativ kostenintensive Fertigungsmassnahmen darstellen. In vielen Fällen ist es daher zweckmässig, in das tragende Gehäusebauteil giesstechnisch Gewindebolzen einzubetten und das anzubringende Bauteil mittels Muttern zu befestigen. Unumgänglich ist eine derartige Bauweise, wenn, wie dies beispielsweise bei der Anordnung von Leiterplatten insbesondere von Leiterplattenpaketen der Fall ist, ein allseitiger Abstand zu dem tragenden Gehäusebauteil eingehalten werden muss, bei relativ hohen, ein Gerät lediglich rückseitig abschliessenden, dünnwandigen Abdeckhauben eine Zentrierung bzw. Ausrichtung in der Ebene der Geräterückwand erforderlich ist und bei Einbaugeräten, bei denen die durch die Rückwand des Gerätes hindurchgreifenden Gewindebolzen sowohl der Lageausrichtung der Rückwand als auch der Aufnahme von das Gerät an einem Gerätetableau festhaltenden Spannklauen und diesen zugeordneten Muttern dienen.

Bei eichpflichtigen Geräten kommt als Kostenlast hinzu, dass die geschilderten Verbindungen plombiert werden müssen. Um dieser Forderung gerecht zu werden, andererseits aber den Montageaufwand so gering wie möglich zu halten, ist bereits verwirklicht worden, zusätzlich zur Lageausrichtung durch Gewindebolzen Spreizniete, die die Festhalte- und Plombierfunktion übernehmen, vorzusehen und auf eine Befestigung mittels den Gewindebolzen zugeordneten Muttern zu verzichten. Dies ist ein in jeder Beziehung, d.h. fertigungstechnisch und bezüglich der Plombierfunktion zweifelhafter Kompromiss, der ohnehin nur in sehr wenigen Fällen anwendbar ist. Ferner werden miteinander zu verbindende Gehäusebauteile wegen der erforderlichen Eingriffssicherheit im allgemeinen derart ausgebildet, dass sie mit relativ sattem Sitz gegenseitig ineinandergreifen, wodurch bereits eine ausreichend gute Halterung geschaffen ist. Dies bedeutet, dass von den in axialer Richtung wirkenden Befestigungselementen, nur noch relativ geringe Haltekräfte aufgebracht werden müssen, vielfach lediglich ein spielfreies Sichern in axialer Richtung gefordert ist.

Mit der GB-A-13 34 236 ist ein für diesen Zweck geeignetes Befestigungselement bekannt geworden, das durch Aufstecken auf einen gekerbten Bolzen wirksam wird. Dabei verrasten an der Innenwand einer Hülse angeformte Rastnasen mit dem Bolzen, während ein an der Aussenwand der Hülse angeformter Kragen der axialen Federung des Befestigungselementes dient. Zwar ist dieses Befestigungselement leicht herstell- und montierbar, es erfordert aber infolge des Kragens einen relativ grossen Montageraum und lässt keine ebenflächige Verbindung mit dem zu befestigenden Bauteil zu. Der entscheidende Nachteil besteht jedoch darin, dass die beiden Rastnasen von aussen zugänglich sind und sich aus ihrer Verrastung ohne Beschädigung herausbiegen lassen, d.h. dass bei diesem Befestigungselement keine Plombierfunktion gegeben ist.

Ausgehend von dieser Situation war die Aufgabe gestellt, für lösbar miteinander verbindbare Bauteile eine Sicherungs- bzw. Befestigungsanordnung zu schaffen, deren Fertigungs- und Montageaufwand weitgehend reduziert und der Serienfertigung angepasst ist, die für eine Vielzahl von Befestigungsaufgaben gleichwertig anwendbar ist und deren Befestigungselement zusätzlich die Bedingungen einer Plombe erfüllt.

Die Lösung dieser Aufgabe sieht vor, dass die innere Hülse an der der Montagerichtung abgekehrten Stirnseite geschlossen ist.

Ein bevorzugtes Ausführungsbeispiel ist dadurch gekennzeichnet, dass die beiden Hülsen durch radiale Wandsegmente miteinander verbunden sind und dass das Rastelement als umlaufende Rippe ausgebildet ist.

Besonders vorteilhaft ist ferner eine Ausbildung, bei der die die beiden Hülsen verbindende Wand gewellt geformt ist.

Die Erfindung löst die gestellte Aufgabe in überraschend einfacher Weise durch ein lageunabhängiges Aufrasten eines Befestigungselementes auf einen gehäusefesten Bolzen und bietet zusätzlich den Vorteil, dass sie sich raumsparend auswirkt und dass sie auch mit an dem tragenden Gehäusebauteil angespritzten Zapfen verwirklicht werden kann. Die besondere Form des spritzgusstechnisch herstellbaren Befestigungselementes ermöglicht durch radiale und axiale Federungsfähigkeit in einem Fall ähnlich einer Rollmembrane ferner eine ausreichend gute Anpassung, an die oft erheblichen, toleranzbedingten Massabweichungen und temperaturbedingten Dehnungen spritzgusstechnisch hergestellter Gehäusebauteile, aber auch Anpassung an eine Schieflage von Bolzen bzw. der in dem Bolzen ausgebildeten Rastnut und der dem Befestigungselement zugeordneten Auflagefläche an dem zu befestigenden Gehäusebauteil. Erwähnt sei ferner die im Gegensatz beispielsweise zu zwischen zu verbindenden Gehäusebauteilen nur bedingt anwendbaren Schnappverbindungen relativ leichte Lösbarkeit des Befestigungselementes, aber auch dessen Plombierfähigkeit, d.h. dass das Befestigungselement, das eine sozusagen koaxial angeordnete Plombe darstellt, beim Versuch, es zu lösen, mit Sicherheit nicht mehr reparierfähig beschädigt wird.

Bemerkenswert ist auch, dass das Sicherungs- und Befestigungselement aufgrund seiner Federungsfähigkeit sowohl mittels einer «inneren» Passung bezüglich des Bolzens als auch mit einer «äusseren» Passung bezüglich einer im zu befestigenden Bauteil befindlichen Senkung ausgebildet sein kann, wodurch eine erhöhte Eingriffsicherheit erzielt wird. Eine Ausführungsvariante, bei der die Stirnflächen der beiden Hülsenabschnitte einseitig in einer Ebene liegen, ist insbesondere deshalb von Vorteil, weil mit ihr eine ebenflächige Anordnung des Befestigungselementes mit dem anzubringenden Bauteil möglich ist.

Im folgenden sei die Erfindung anhand der beigefügten Zeichnungen näher erläutert. Es zeigen

Fig. 1 die Anwendung der erfindungsgemässen Befestigungsanordnung an einem eine Gehäuseabdeckung haltenden, gleichzeitig aber auch der Gerätebefestigung dienenden Bolzen,

Fig. 2 eine perspektivische Darstellung des Befestigungselementes,

Fig. 3 eine Querschnitt durch eine Ausführrungsvariante des Befestigungselementes,

Fig. 4 eine Draufsicht der Ausführungsvariante gemäss Fig. 3,

Fig. 5 einen Querschnitt durch eine weitere Ausführungsvariante,

Fig. 6 eine Draufsicht der Ausführungsvariante gemäss Fig. 5.

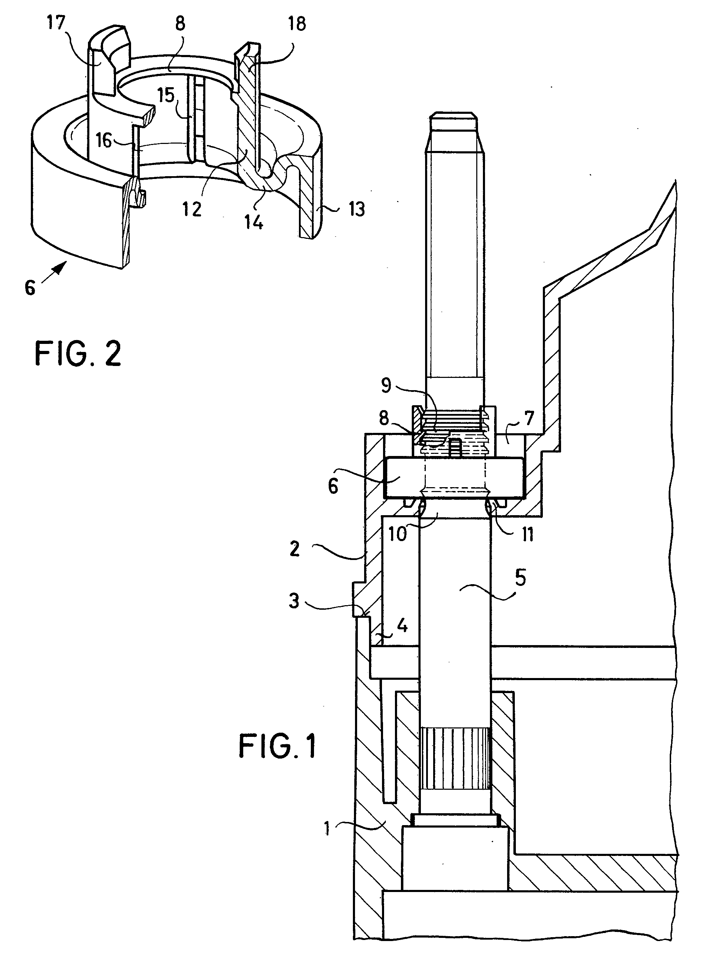

Wie der ein Anwendungsbeispiel darstellende Teilschnitt Fig. 1 zeigt, ist mit einem ersten Bauteil, einem tragenden Gerätegehäuse 1, ein zweites Bauteil, eine das Gerät rückseitig abschliessende, somit Rückwand bildende Gehäuseabdeckung 2, lösbar verbunden. Die Verbindung besteht einerseits darin, dass ein an der Gehäuseabdeckung 2, die mit einer Schulter 3 stirnseitig auf dem Rand des Gehäuses 1 aufsitzt, ausgebildeter Zentrieransatz 4 in das Gehäuse 1 eingreift, anderrerseits darin, dass ein in dem Gehäuse eingebetteter Gewindebolzen 5 durch die Gehäuseabdeckung 2 hindurchgreift und ein mit dem Gewindebolzen 5 verrastetes Befestigungselement 6 sich federnd am Grunde einer in der Gehäuseabdeckung 2 ausgeformten Senkung 7 abstützt, wobei eine an dem Befestigungselement 6 ausgebildete, nach innen weisende Rippe 8 und ein Einstich 9 — wegen des beim gewählten Anwendungsbeispiel erheblich schwankenden Toleranzfeldes sind mehrere Einstiche nebeneinander vorgesehen — als Rastelemente wirksam sind. Wie schon erwähnt, dienen zwei derartige Gewindebolzen 5 dem Haltern von, weil nicht erfindungswesentlich nicht dargestellten Spannklauen, die, wenn das betreffende Gerät in einem nicht dargestellten Gerätetableau eingesetzt ist, ihrerseits das Gerät festhalten, indem sie sich unter der Wirkung von auf den Gewindebolzen 5 angeordneten und von Hand anziehbaren Rändelmuttern an der Rückseite des Gerätetableaus abstützen. Erwähnt sei ferner, dass bei dem dargestellten Anwendungsbeispiel eine an dem Gewindebolzen 5 vorgesehene Rastkehle 10 und ein an der Geräteabdeckung 2 ausgebildeter Kragen 11 Mittel zur federnden Ausrichtung der Geräteabdeckung 2 darstellen.

Die teilweise geschnittene perspektivische Darstellung Fig. 2 zeigt, dass das hülsenförmige Befestigungselement 6 aus zwei zylindrischen Hülsen 12 und 13 besteht, die durch eine nach Art einer Rollmembrane gewellte und, verglichen mit den Wandstärken der Hülsen 12 und 13, vorzugsweise verdünnte Wand 14 konzentrisch miteinander verbunden sind. Mit 15 und 16 sind zwei in der Hülse kleineren Durchmessers 12 diametral gegenüberliegend ausgebildete Schlitze bezeichnet. Zwei ebenfalls an der Hülse 12 stirnseitig angeformte Zungen 17 und 18 dienen, indem sie an ihrer Innenseite konisch ausgebildet sind, dem Ansetzen eines Werkzeuges und zusammen mit den Schlitzen 15 und 16 dem Aufbrechen des Befestigungselementes 6 beim Lösen der erfindungsgemässen Befestigungsanordnung.

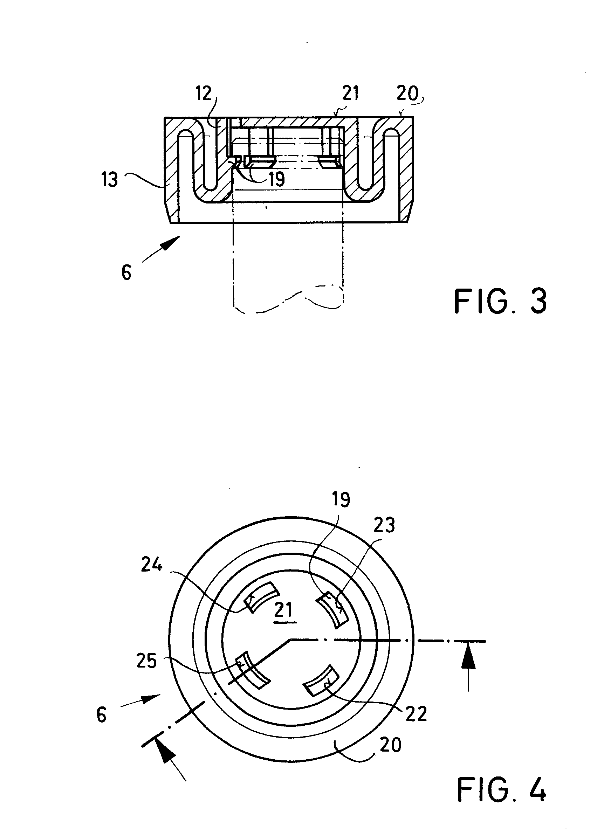

Bei der sich durch niedrige Bauhöhe auszeichnenden Ausführungsvariante gemäss den Fig. 3 und 4 sind an der Hülse kleineren Durchmessers 12 des Befestigungselementes 6 mehrere nach innen weisende Rastnasen, von denen eine mit 19 bezeichnet ist, ausgebildet. Ausserdem ist diese Ausführungsvariante dadurch gekennzeichnet, dass die Stirnflächen 20 und 21 der Hülsen 12 und 13 an einer Stirnseite des Befestigungselementes 6 im wesentlichen in einer Ebene liegen und die Hülse 12 stirnseitig bis auf Ausformöffnungen 22, 23, 24 und 25 für die Rastnasen 19 geschlossen ist. Diese Lösung gestattet, wenn das Befestigungselement 6 versenkt angeordnet werden kann, eine ebenflächige Verbindung mit dem anzubringenden Bauteil. Das Befestigungselement lässt sich aber auch aufsitzend oder lediglich teilweise versenkt anwenden.

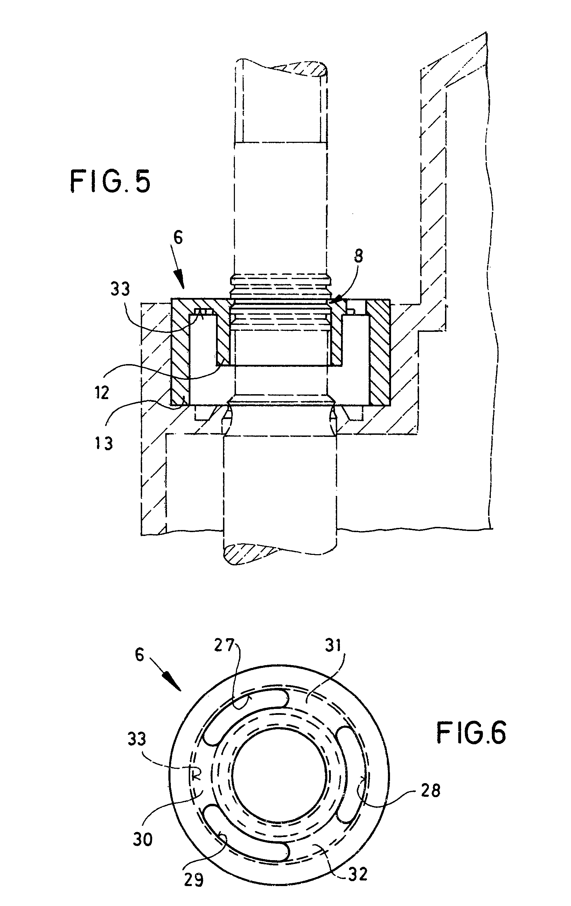

Die Ausführungsvariante des Befestigungselementes 6 gemäss den Fig. 5 und 6 ist zwar auf Anwendungen beschränkt, die weniger Federungsfähigkeit erfordern, sie ist aber formtechnisch besonders einfach. Eine die beiden Hülsen 12 und 13 verbindende, ringförmige Wand ist von mehreren in Umfangsrichtung verlaufenden Schlitzen 27, 28, 29 durchbrochen, d.h. mit den Schlitzen 27, 28, 29 sind radiale Wandsegmente 30, 31, 32 ausbildbar und entsprechend den vorliegenden Festhaltebedingungen durch Verbreitern oder Verjüngen oder auch Ausdünnen 33 problemlos anpassbar.

## Patentansprüche

1. Befestigungselement (6) zum Befestigen und Plombieren eines von einem Bolzen (5) durchdrungenen Bauteiles (2) an einem den Bolzen (5) halternden Bauteil (1) welches Befestigungselement (6) auf den Bolzen (5) axial aufsteckbar ist, bestehend aus zwei koaxial angeordneten und zylindrisch ausgebildeten Hülsen (12, 13), die wenigstens axial federnd miteinander verbunden sind, mit an der inneren Hülse (12) nach innen weisenden Rastelementen (8, 19), die mit wenigstens einem an dem Bolzen (5) ausgebildeten Einstich (9) zusammenwirken, wobei der Innendurchmesser der inneren Hülse (12) im wesentlichen gleich ist dem Durchmesser des Bolzens (5), dadurch gekennzeichnet, dass die innere Hülse (12) an der der Montagerichtung abgekehrten Stirnseite geschlossen ist.

2. Befestigungselement gemäss der Befestigungsanordnung nach Anspruch 1, dadurch gekennzeichnet, dass die beiden Hülsen (12, 13) durch radiale Wandsegmente (30, 31, 32) miteinander verbunden sind und dass das Rastelement als umlaufende Rippe (8) ausgebildet ist.

3. Befestigungselement gemäss der Befestigungsanordnung nach Anspruch 1 und 2, dadurch gekennzeichnet, dass die die beiden (12, 13) Hülsen verbindende Wand (14) gewellt geformt ist.

4. Befestigungselement gemäss der Befestigungsanordnung nach Anspruch 1 und 3, dadurch gekennzeichnet, dass in der Hülse kleineren Durchmessers (12) wenigstens ein axial gerichteter Schlitz (15) ausgebildet und an der Hülse (12) stirnseitig eine Zunge (17) derart angeformt ist, dass zwischen dem Bolzen (5) und der Zunge (17) ein Werkzeug zum Aufbrechen des Befestigungselementes (6) ansetzbar ist.

5. Befestigungselement gemäss der Befestigungsanordnung nach Anspruch 1, dadurch gekennzeichnet, dass an der Hülse kleineren Durchmessers (12) mehrere, nach innen weisende Rastnasen (19) angeformt sind und dass die Hülse (12) an einer Stirnseite bis auf den Rastnasen (19) zugeordnete Ausformöffnungen (22, 23, 24, 25) geschlossen ist.

## Revendications

1. Elément de fixation (6) pour la fixation et le plombage d'une pièce de montage (2) traversée par un boulon (5) sur une pièce de montage (1) supportant ledit boulon (5) où l'élément de fixation (6) peut être enfiché axialement sur ledit boulon (5), constitué de deux douilles (12, 13) de disposition coaxiale et de configuration cylindrique qui sont assemblées élastiquement au moins dans le sens axial l'une avec l'autre, avec, sur la douille intérieure (12), des éléments d'arrêt (8, 19) dirigés vers l'intérieur, qui coopèrent avec au moins une encoche (9) pratiquée sur le boulon (5), le diamètre intérieur de la douille intérieure (12) étant, pour l'essentiel, égal au diamètre du boulon (5), caractérisé par le fait que la douille intérieure (12) est fermée sur la face frontale tournant le dos au sens de montage.

2. Elément de fixation selon le dispositif de fixation d'après la revendication 1, caractérisé par le fait que les deux douilles (12, 13) sont assemblées l'une avec l'autre par des segments de paroi radiaux (30, 31 et 32) et que l'élément d'arrêt est réalisé sous forme de nervure (8) circonférentielle.

3. Elément de fixation selon le dispositif de fixation d'après l'une quelconque des revendications 1 et 2, caractérisé par le fait que la paroi (14) assemblant les deux douilles (12, 13) présente une forme ondulée.

4. Elément de fixation selon le dispositif de fixation d'après l'une quelconque des revendications 1 et 2, caractérisé par le fait que dans la douille de diamètre inférieur (12) est pratiquée au moins une fente (15) dirigée dans le sens axial et que sur ladite douille (12) est moulée, du côté frontal, une languette (17) de telle sorte qu'un outil pour fracturer l'élément de fixation (6) puisse être appliqué entre le boulon (5) et la languette (17).

5. Elément de fixation selon le dispositif de fixation d'après la revendication 1, caractérisé par le fait que sur la douille de diamètre inférieur (12) sont moulés plusieurs talons d'arrêt (19) dirigés vers l'intérieur et que ladite douille (12) est fermée sur une face frontale à l'exception des ouvertures de moulage (22, 23, 24, 25) associées aux languettes d'arrêt (19).

## Claims

1. Attachment member (6) for attaching and sealing a component (2) penetrated by a bolt (5), to a component (1) retaining the bolt (5), which attachment member (6) can be fitted axially on the bolt (5), comprising two coaxially arranged and cylindrically constructed sleeves (12, 13), which are connected to each other in an at least axially resilient manner, with locking members (8, 19) directed inwardly on the inner sleeve (12), which co-operate with at least one recess (9) formed on the bolt (5), the inner diameter of the inner sleeve (12) being substantially equal to the diameter of the bolt (5) characterised in that the inner sleeve (12) is closed on the end face remote from the assembly direction.

2. Attachment member according to the attachment arrangement of Claim 1, characterised in that the two sleeves (12, 13) are connected to each other by radial wall segments (30, 31 and 32) and that the locking member is constructed as a peripheral rib (8).

3. Attachment member according to the attachment arrangement of Claims 1 and 2, characterised in that the wall (14) connecting the two sleeves (12, 13) is undulating.

4. Attachment member according to the attachment arrangement of Claims 1 and 3, characterised in that formed in the sleeve (12) of smaller diameter is at least one axially directed slot (15) and a tongue (17) is formed on the end face of the sleeve (12) so that a tool for forcing open the attachment member (6) can be fitted between the bolt (5) and the tongue (17).

5. Attachment member according to the attachment arrangement of Claim 1, characterised in that formed on the sleeve (12) of smaller diameter are a plurality of inwardly directed locking lugs (19) and that the sleeve (12) is closed on one end face except for release openings (22, 23, 24, 25) associated with the locking lugs (19).

FIG. 2

FIG. 1

FIG. 3

FIG. 4

- 3/3 -

FIG.5

FIG.6